# EUROPEAN PATENT SPECIFICATION

(11) **EP 0 323 223 B1**
(45) Date of publication and mention of the grant of the patent: **22.12.1993**
(21) Application number: 88312358.0
(22) Date of filing: 28.12.1988
(51) Int. Cl.: H04M 19/00

(54) **Telephone interface circuit**
Fernsprechschnittstellenschaltung
Circuit d'interface électronique

(30) Priority: 28.12.1987 IT 2323687
(43) Date of publication of application: 05.07.1989
(73) Proprietor: SGS-THOMSON MICROELECTRONICS s.r.l., 20041 Agrate Brianza (Milano) (IT)
(72) Inventor: Siligoni, Marco, I-9 20010 Vittuone (IT); Lorena, Emilio, I-20072 Parona (IT)
(74) Representative: Robinson, John Stuart

(56) References cited:
- EP-A- 0 185 213
- FR-A- 2 491 704
- GB-A- 2 173 072

## Description

The present invention relates to a telephone interface circuit, for instance which may be monolithically integrated, and used between a subscriber's telephone line and exchange control components.

A serious problem which may arise with a subscriber's telephone line is the breakage of the line or of the telephone cable which contains the line together with other lines. If, following breakage of the line, both the wires of the line are short-circuited to earth, as is the case, for instance, when the line is cut on wet ground, the condition known as "earthed cable" occurs. In this condition the supply circuit supplies all the current available.

In telephone interface circuits, as is normally the case for all integrated circuits, there is a maximum instantaneous current limitation to avoid damage to the circuit components (the limitation current may have a typical value of 100 mA).

The part of the interface circuit which acts as a supply source for the line operates, however, at high voltages (from -48 to -60 V with respect to earth potential) and the electrical power dissipated is therefore very high. Adequate limitation of the dissipated power must therefore be provided in the circuit by means of heat protection conventionally incorporated in integrated circuits.

Although the problem can be partially resolved in this way in the case of an individual subscriber's telephone line, it is particularly serious when the "earthed cable" condition affects all the telephone lines contained in a multiple telephone cable which has been accidentally cut. The overall consumption of current may in this case exceed the current capacity of the exchange supply device (battery), causing the exchange protection apparatus to come into operation and thus completely closing down its operation. Telephone communications, including those on lines not affected by the breakdown, are thus interrupted until the cable is repaired or isolated.

The only solution to the problem at present is to limit further the maximum current which can be supplied by the individual interface circuit connected to a subscriber's telephone line to a level compatible with the overall capacity of the exchange supply device, even in the case of a multiple earthed cable. Excessive limitation of the current which can be supplied by the interface circuit to the subscriber's telephone line conflicts, however, with other requirements.

EP-A-O 185 213 discloses an arrangement for protecting a subscriber circuit in a digital telephone exchange against overload. A field effect transistor (FET) is connected in series with one line of the subscriber circuit and limits the maximum current supplied to the circuit to an upper limit. If the current is limited to the upper limit for longer than a predetermined time period, the supply current is interrupted by switching off the FET. The FET is not allowed to conduct again until twice the time period has elapsed. In this arrangement, upper limit is not fixed but instead follows changes in the amplitude and direction of the supply current.

According to the invention, there is provided a telephone interface circuit as defined in the appended Claim 1.

Preferred embodiments of the invention are defined in the other appended claims.

It is thus possible to provide a telephone interface circuit for use between a subscriber's telephone line and exchange control components which can be monolithically integrated and which allows a drastic reduction of the consumption of electrical energy in the case of an "earthed cable" with no restriction on the normal performance of the system.

The invention will be further described, by way of example, with reference to the accompanying drawings, in which:
Figure 1 is a block diagram of a telephone interface circuit constituting a preferred embodiment of the invention; and
Figure 2 is a circuit diagram of one of the blocks of Figure 1.

The same reference letters are used for corresponding components in the Figures.

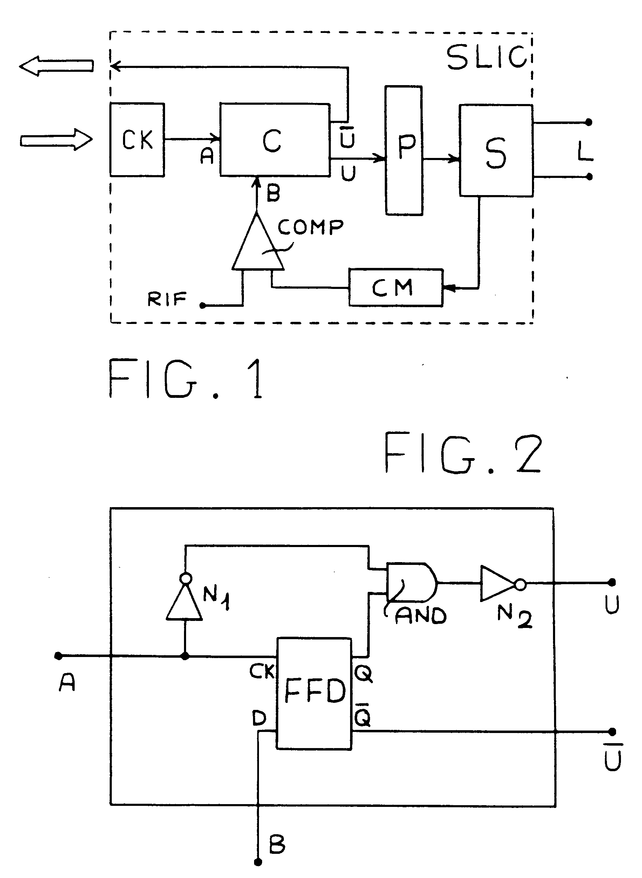

A telephone interface circuit SLIC is shown overall in Figure 1 by a rectangular block in broken lines. In the technical literature SLIC (Subscriber Line Interface Circuit) is used to designate a monolithically integrated interface circuit which is connected to a subscriber's telephone line and which also supplies power to the line. Terminals or other devices for connection to the exchange control apparatus not shown in the drawings are indicated by two arrows, one in the input direction and one in the output direction.

A pair of output terminals for connection to the subscriber's telephone line (not shown) is indicated by L. The output terminals L are the output terminals of circuit means S for the supply of the subscriber's telephone line contained in the circuit SLIC.

The telephone interface circuit also comprises circuit means, not shown in detail in the block diagram, for receiving, amplifying and transmitting signals under the control of control circuits in the exchange. The operation of these circuits and of the supply means S for supplying the subscriber's telephone line is ensured by circuit biasing means P connected thereto. The circuit biasing means P is connected to the supply means S and has at least one control terminal to which a signal may be supplied to cut off the remainder of the circuit or part thereof and, in particular, to deactivate the supply means S so as to cease supplying the subscriber's telephone line. The discontinuation of the supply to the subscriber's telephone line can thus be controlled through this control terminal.

The telephone interface circuit also comprises circuit current detector means CM which are connected to the subscriber's telephone line via the circuit supply means S. The detector means CM are designed to generate continuously a measurement signal of the instantaneous value of the "longitudinal" or "common-mode" currents having at every instant identical amplitudes and directions in both wires of the line.

A possible circuit embodiment of the circuit means S and CM is disclosed, for example, in Italian Patent Application No.19983 A/85 in the name of the applicants.

The telephone interface circuit also comprises a threshold comparator COMP having first and second input terminals connected to a reference signal source RIF and to the detector means CM, respectively. The threshold comparator COMP has an output terminal at which it generates a signal when the value of the signal generated by the detector means CM exceeds a predetermined value defined by the reference signal.

A source of timing signals, spaced in a predetermined manner and each having a predetermined duration, is shown at CK in Figure 1. This source may be either a signal generator within the telephone interface circuit or a simple terminal for connection to the exchange components or a circuit for processing signals coming from the exchange (for example a series of frequency dividers). The timing signals used preferably have a regular rhythm with a comparatively long repetition period (typically 1-10 seconds) a very short duration in time (typically 0.1-0.3 seconds), and a waveshape of rectangular type.

The telephone interface circuit has a control circuit C having first and second inputs A and B connected respectively to the source CK of timing signals and to the output terminal of the comparator COMP respectively a first output terminal U connected to the control terminal of the biasing means P, and a second output terminal U̅ connected to the exchange control components. When a signal is supplied to the first input terminal A, the control circuit C (shown in more detail in Figure 2) does not generate an output signal even if a signal is simultaneously being supplied to the second input terminal B. However, an output signal is generated at both terminals U and U̅ during the whole time interval between consecutive timing signals when, at the trailing edge of the earlier timing signal supplied to the first input terminal A, a signal is simultaneously supplied to the second input terminal B.

Operation of the telephone interface circuit will now be described.

When the "earthed cable" condition occurs in a subscriber's telephone line with both wires of the line short-circuited to earth, the magnitudes of the longitudinal currents increases substantially. The value of the measurement signal generated by the circuit current detector means CM then exceeds the predetermined value which determines the threshold of the comparator COMP. The compatator thus generates an output signal which is supplied to the second terminal B of the control circuit C.

From the time of the trailing edge of the first timing signal following the line breakage, at which time the control circuit can "sense" the signal supplied to the second input terminal B, the control circuit in turn generates an output signal. This signal is supplied to the control terminal of the circuit biasing means P and causes parts of the telephone interface circuit to be cut off and the supply to the subscriber's telephone line to be discontinued, thus stopping electrical power consumption as a result of the breakdown. As long as the "earthed cable" condition persists, the control circuit C continues to generate the cut-off signal during all the time intervals between the timing signals.

During the short time intervals in which the timing signals are supplied to the first input terminal A, the line is again supplied and the control circuit can again detect the "earthed cable" condition and control the cut off after each timing signal until the following signal.

As soon as the "earthed cable" condition is repaired the comparator no longer generates an output signal even when the line is supplied again. Consequently, at the trailing edge of the first timing signal following or simultaneous with the repair of the breakdown, the control circuit C senses the removal of the "earthed cable" condition and allows the line to continue to be normally supplied.

In this way current consumption, limited in any case by the protection already included in the integrated circuit, takes place only during the extremely brief periods of re-activation. No further current limitation is thus required and the exchange can operate even when a multiple telephone cable is cut without any detriment to subscribers not directly affected by the breakdown.

Figure 2 is a circuit diagram of a preferred embodiment of the control circuit C, which comprises a memory element FFD formed by a D-type bistable multivibrator responsive to the trailing edges of the timing signals. The multivibrator has first and second input terminals CK and D which form the first and second input terminals A and B, respectively, of the control circuit C.

The input terminal of a first inverter circuit N1, whose output terminal is connected to a first input terminal of an AND gate, is also connected to the first input terminal A. The AND gate has a second input terminal which is connected to a first output terminal Q of the multivibrator and an output terminal connected to the input terminal of a second inverter circuit N2. The output terminal of the inverter circuit N2 forms the first output terminal U of the control circuit C. A second output terminal Q̅ of the multivibrator forms the second output terminal of the control circuit C, used for connection to the exchange control components ("engagement sensor") which generate an appropriate signal to callers showing that this line is "engaged" when the subscriber's line is cut.

## Claims

1. A telephone interface circuit for use between a subscriber's telephone line and a telephone exchange control circuit, comprising means (S) for supplying the subscriber's telephone line, means (CM) for generating a measurement signal dependent on the telephone line common mode current, and biasing means (P) having a control input and arranged to deactivate the supply means (S) in response to a signal at the control input, characterised by: a threshold comparator (COMP) having a first input connected to receive the measurement signal, a second input for receiving a reference signal, and an output which supplies a signal when the measurement signal exceeds the reference signal; and a control circuit (C) having a first input (A) for receiving timing signals, a second input (B) connected to the output of the threshold comparator (COMP), and an output connected to the control input of the biasing means (P), the control circuit (C) being arranged not to generate an output signal whenever a timing signal is supplied to the first input and to generate an output signal during the time between each consecutive pair of timing signals when the comparator (COMP) supplies a signal to the second input (B) at the end of the first of the pair of timing signals.

2. A circuit as claimed in Claim 1, characterised in that the control circuit (C) comprises a circuit means (FFD) having first and second input terminals which form the first and second inputs (A, B) of the control circuit (C) and at least a first output, a first invertor (N1) having an input connected to the first input (A) and an output, an AND gate (AND) having first and second inputs connected to the first output of the circuit means and to the output of the first invertor and having an output, and a second invertor (N2) having an input connected to the output of the AND gate (AND) and an output which forms the first output of the control circuit, the circuit means (FFD) being arranged to generate an output signal only when, at the time of the trailing edge of a timing signal, a signal is simultaneously supplied to the second input.

3. A circuit as claimed in Claim 1, characterised in that the circuit means is a D-type bistable multivibrator responsive to the trailing edges of the timing signals.

4. A circuit as claimed in any one of Claims 1 to 3, characterised in that the control circuit (C) has a second output terminal for coupling to a sensor for detecting engagement of the subscriber's telephone line in the exchange.

5. A circuit as claimed in any one of the preceding claims, characterised by including signal receiving, amplifying, and transmitting means.

6. A monolithically integrated circuit characterised by including a circuit as claimed in any one of the preceding claims.

## Patentansprüche

1. Telefonschnittstellenschaltung zur Benutzung zwischen einer Fernsprechteilnehmertelefonleitung und einer Telefonfernvermittlungssteuerschaltung mit einer Einrichtung (S) zum Versorgen der Fernsprechteilnehmertelefonleitung, einer Einrichtung (CM) zum Erzeugen eines Meßsignals abhängig von dem Gemeinsam-Modus-Strom der Telefonleitung, und einer Vorspannungseinrichtung (P) mit einem Steuereingang und eingerichtet zum Deaktivieren der Versorgungseinrichtung (S), ansprechend auf ein Signal an dem Steuereingang, gekennzeichnet durch einen Schwellwertkomparator (COMP) mit einem ersten Eingang, der verbunden ist, das Meßsignal zu empfangen, einem zweiten Eingang zum Empfangen eines Referenzsignals und einem Ausgang, welcher ein Signal zuführt, wenn das Meßsignal das Referenzsignal überschreitet; und eine Steuerschaltung (C) mit einem ersten Eingang (A) zum Empfangen von Zeitsignalen, einem zweiten Eingang (B), der verbunden ist mit dem Ausgang des Schwellwertkomparators (COMP), und einem Ausgang verbunden mit dem Steuereingang der Vorspannungseinrichtung (B), wobei die Steuerschaltung (C) darauf ausgerichtet ist, nicht ein Ausgangssignal zu erzeugen, wenn immer ein Zeitsignal zugeführt wird an den ersten Eingang, und ein Ausgangssignal zu erzeugen während der Zeit zwischen jedem aufeinanderfolgenden Paar von Zeitsignalen, wenn der Komparator (COMP) ein Signal zuführt an den zweiten Eingang (B) am Ende des ersten des Paars der Zeitsignale.

2. Schaltung nach Anspruch 1, dadurch gekennzeichnet, daß die Steuerschaltung (C) eine Schaltungseinrichtung (FFD) mit einem ersten und zweiten Eingangsanschluß, welche den ersten und zweiten Eingang (A, B) der Steuerschaltung (C) bilden und zumindest einem Ausgang, einem ersten Inverter (N1) mit einem Eingang verbunden zu dem ersten Eingang (A) und einem Ausgang, ein UND-Gatter (AND) mit einem ersten und zweiten Eingang verbunden mit dem ersten Ausgang der Schaltungseinrichtung und mit dem Ausgang des ersten Inverters und mit einem Ausgang, und einem zweiten Inverter (N2) mit einem Eingang verbunden mit dem Ausgang des UND-Gatters (AND) und einem Ausgang, welcher den ersten Ausgang der Steuerschaltung bildet, umfaßt, wobei die Schaltungseinrichtung (FFD) darauf ausgerichtet ist, ein Ausgangssignal nur dann zu erzeugen, wenn zur Zeit der ansteigenden Flanke eines Zeitsignals gleichzeitig ein Signal zugeführt wird an den zweiten Eingang.

3. Schaltung nach Anspruch 1, dadurch gekennzeichnet, daß die Schaltungseinrichtung ein D-Typ bistabiler Multivibrator ansprechend auf die ansteigenden Flanken der Zeitsignale ist.

4. Schaltung nach einem der Ansprüche 1 bis 3, dadurch gekennzeichnet, daß die Steuerschaltung (C) einen zweiten Ausgangsanschluß zum Ankoppeln eines Sensors zum Erfassen eines Besetztseins der Fernsprechteilnehmerleitung in der Fernvermittlung hat.

5. Schaltung nach einem der vorhergehenden Ansprüche, gekennzeichnet durch eine Signalempfangs-, Verstärkungs- und Übertragungseinrichtung.

6. Monolithisch integrierte Schaltung, gekennzeichnet durch eine Schaltung nach einem der vorhergehenden Ansprüche.

## Revendications

1. Circuit d'interface de téléphone destiné à être utilisé entre une ligne téléphonique d'abonné et un circuit de commande de central téléphonique, comprenant un moyen (S) pour alimenter la ligne téléphonique d'abonné, un moyen (CM) pour générer un signal de mesure dépendant du courant de mode commun de ligne téléphonique et un moyen de polarisation (P) comportant une entrée de commande et agencé pour désactiver le moyen d'alimentation (S) en réponse à un signal au niveau de l'entrée de commande, caractérisé par: un comparateur de seuil (COMP) comportant une première entrée connectée pour recevoir le signal de mesure, une seconde entrée pour recevoir un signal de référence et une sortie qui applique un signal lorsque le signal de mesure excède le signal de référence; et un circuit de commande (C) comportant une première entrée (A) pour recevoir des signaux de cadencement, une seconde entrée (B) connectée à la sortie du comparateur de seuil (COMP) et une sortie connectée à l'entrée de commande du moyen de polarisation (P), le circuit de commande (C) étant agencé de manière à ne pas générer un signal de sortie chaque fois qu'un signal de cadencement est appliqué à la première entrée et de manière à générer un signal de sortie pendant la durée séparant chaque paire consécutive de signaux de cadencement lorsque le comparateur (COMP) applique un signal à la seconde entrée (B) à la fin du premier signal de la paire de signaux de cadencement.

2. Circuit selon la revendication 1, caractérisé en ce que le circuit de commande (C) comprend un moyen de circuit (FFD) comportant des première et seconde bornes d'entrée qui forment les première et seconde entrées (A, B) du circuit de commande (C) et au moins une première sortie, un premier inverseur (N1) comportant une entrée connectée à la première entrée (A) et une sortie, une porte ET (ET) comportant des première et seconde entrées connectées à la première sortie du moyen de circuit et à la sortie du premier inverseur et comportant une sortie, et un second inverseur (N2) comportant une entrée connectée à la sortie de la porte ET (ET) et une sortie qui forme la première sortie du circuit de commande, le moyen de circuit (FFD) étant agencé pour générer un signal de sortie seulement lorsque, à l'instant du front descendant d'un signal de cadencement, un signal est simultanément appliqué à la seconde entrée.

3. Circuit selon la revendication 1, caractérisé en ce que le moyen de circuit est un multivibrateur bistable de type D sensible aux fronts descendants des signaux de cadencement.

4. Circuit selon l'une quelconque des revendications 1 à 3, caractérisé en ce que le circuit de commande (C) comporte une seconde borne de sortie permettant un couplage à un détecteur pour détecter une mise en coopération de la ligne téléphonique d'abonné dans le central.

5. Circuit selon l'une quelconque des revendications précédentes, caractérisé en ce qu'il inclut un moyen de réception, d'amplification et d'émission de signal.

6. Circuit intégré monolithique caractérisé en ce qu'il inclut un circuit tel que revendiqué selon l'une quelconque des revendications précédentes.
